# EUROPEAN PATENT APPLICATION

(11) **EP 4 422 275 A1**
(43) Date of publication of application: **28.08.2024**
(21) Application number: 24153389.2
(22) Date of filing: 23.01.2024
(51) Int. Cl.: H04W 36/00, H04W 36/36

(54) **CONDITIONAL HANDOVER**

(30) Priority: 27.02.2023 GB 202302784
(71) Applicant: Nokia Technologies Oy, 02610 Espoo (FI)
(72) Inventor: KOLLÁR, Martin, Kosice (SK); PANTELIDOU, Anna, Antony (FR)
(74) Representative: Nokia EPO representatives

(57) **Abstract**

A network node comprising:
means for providing to one or more UE, a UE configuration for conditional handover from a serving cell to one or more target cells, wherein the UE configuration for conditional handover configures one or more conditions for executing conditional handover;
means for providing to the one or more target cells, a network configuration for conditional handover from a serving cell to the one or more target cells, wherein the network configuration for conditional handover configures at least one or more network resources for conditional handover;
wherein the network configuration for conditional handover provides at least an estimated arrival timing for a UE arriving for handover at a target cell.

## Description

### TECHNOLOGICAL FIELD

Examples of the disclosure relate to conditional handover.

### BACKGROUND

Conditional Handover (CHO) is a handover that is executed by the UE 110 when one or more handover execution conditions are met.

In conditional handover, instead of preparing one target cell, one or more multiple candidate target cells are prepared in advance. The handover command is sent to the UE 110 early in advance of when handover may be required. The handover command configures target cells and the conditions at the UE 110.

When a condition configured in the UE 110 is satisfied for one of the configured target cells, then UE 110 executes the handover and connects to the target cell.

The target cells do not expect the UE to access the cell immediately, or even access it at all.

### BRIEF SUMMARY

According to various, but not necessarily all, examples there is provided a network node comprising:
means for providing to one or more user equipment (UE), a UE configuration for conditional handover from a serving cell to one or more target cells, wherein the UE configuration for conditional handover configures one or more conditions for executing conditional handover;
means for providing to the one or more target cells, a network configuration for conditional handover from a serving cell to the one or more target cells, wherein the network configuration for conditional handover configures at least one or more network resources for conditional handover;
wherein the network configuration for conditional handover provides at least an estimated arrival timing for a UE arriving for handover at a target cell.

In some but not necessarily all examples, the estimated arrival timing for a UE arriving for handover at a target cell has an associated confidence level and/or an associated probability distribution.

In some but not necessarily all examples, the estimated arrival timing for a UE arriving for handover at a target cell defines an estimated time interval of arrival at the target cell.

In some but not necessarily all examples, the estimated arrival timing for a UE arriving for handover at a target cell defines a confidence level and/or a probability distribution.

In some but not necessarily all examples, the estimated arrival timing for a UE arriving for handover at a target cell explicitly defines a time window with an implicitly defined confidence level.

In some but not necessarily all examples, the estimated arrival timing for a UE arriving for handover at a target cell explicitly defines a time window and explicitly defines a confidence level.

In some but not necessarily all examples, the window is defined as a time range or as a deviation from a mean.

In some but not necessarily all examples, the estimated arrival timing for a UE arriving for handover at a target cell explicitly defines a confidence level and implicitly defines a time window.

In some but not necessarily all examples, the estimated arrival timing for a UE arriving for handover at a target cell is comprised within an information element comprised with a Conditional Handover Information Request information element comprised within a Handover Request Message.

In some but not necessarily all examples, the Conditional Handover Information Request information element comprises an Estimated Time Interval of Arrival information element and a related Confidence Level information element.

In some but not necessarily all examples, the Conditional Handover Information Request information element comprises a Type of Probability Distribution IE.

In some but not necessarily all examples, the estimated arrival timing for a UE arriving for handover at a target cell is an estimated time of arrival in an estimated area of arrival if the UE continues with an estimated trajectory.

In some but not necessarily all examples, the estimated trajectory is based on historic positions of the UE.

In some but not necessarily all examples, the estimated area of arrival is based on historic positions of UEs when handover occurred to the target cell.

In some but not necessarily all examples, the estimated arrival timing for a UE arriving for handover at a target cell is additionally dependent upon current resource conditions at the target node.

In some but not necessarily all examples, the network node comprises means for providing to a UE, the estimated arrival timing for the UE arriving for handover at a target cell.

In some but not necessarily all examples, the estimated arrival timing for the UE arriving for handover at the target cell is comprised within an information element comprised with a Handover Command sent to the UE.

In some but not necessarily all examples, the information element comprises an Estimated Time Interval of Arrival information element and a related confidence Level information element.

In some but not necessarily all examples, the information element comprises a Type of Probability Distribution IE.

According to various, but not necessarily all, examples there is provided a computer program that when run on a processor of a network node causes:
providing to one or more UE, a UE configuration for conditional handover from a serving cell to one or more target cells, wherein the UE configuration for conditional handover configures one or more conditions for executing conditional handover;
providing to the one or more target cells, a network configuration for conditional handover from a serving cell to the one or more target cells, wherein the network configuration for conditional handover configures at least one or more network resources for conditional handover;
wherein the network configuration for conditional handover provides at least an estimated arrival timing for a UE arriving for handover at a target cell.

According to various, but not necessarily all, examples there is provided a method comprising:
providing to one or more UE, a UE configuration for conditional handover from a serving cell to one or more target cells, wherein the UE configuration for conditional handover configures one or more conditions for executing conditional handover;
providing to the one or more target cells, a network configuration for conditional handover from a serving cell to the one or more target cells, wherein the network configuration for conditional handover configures at least one or more network resources for conditional handover;
wherein the network configuration for conditional handover provides at least an estimated arrival timing for a UE arriving for handover at a target cell.

According to various, but not necessarily all, examples there is provided a network node comprising:
means for receiving from a serving cell a network configuration for conditional handover from the serving cell to a target cell, wherein the network configuration for conditional handover configures at least one or more network resources for conditional handover, wherein the network configuration for conditional handover provides at least an estimated arrival timing for the UE arriving for handover at a target cell;
means for reserving the one or more network resources for conditional handover for a time period dependent upon the estimated arrival timing for the UE arriving for handover at the target cell.

In some but not necessarily all examples, the network node comprises means for modifying one or more network resources for conditional handover in dependence upon a current time period relative to the estimated arrival timing for the UE arriving for handover at the target cell.

In some but not necessarily all examples, the network node comprises means for delaying reservation of network resources and reserving network resources for conditional handover from a time period dependent upon the estimated arrival timing for the UE arriving for handover at the target cell.

In some but not necessarily all examples, the network node comprises means for releasing the one or more network resources for conditional handover after a time period dependent upon the estimated arrival timing for the UE arriving for handover at the target cell.

In some but not necessarily all examples, the network node comprises means for adjusting the estimated arrival timing for the UE arriving for handover at the target cell based on resource conditions at the serving cell.

According to various, but not necessarily all, examples there is provided a computer program that when run on a processor of a network node causes:
reserving one or more network resources for conditional handover for a time period dependent upon an estimated arrival timing for the UE arriving for handover at the target cell, wherein the estimated arrival timing for the UE arriving for handover at the target cell is received from a serving cell during network configuration for conditional handover.

According to various, but not necessarily all, examples there is provided a method comprising:
receiving from a serving cell a network configuration for conditional handover from the serving cell to a target cell, wherein the network configuration for conditional handover configures at least one or more network resources for conditional handover, wherein the network configuration for conditional handover provides at least an estimated arrival timing for the UE arriving for handover at a target cell;
reserving the one or more network resources for conditional handover for a time period dependent upon the estimated arrival timing for the UE arriving for handover at the target cell.

According to various, but not necessarily all, examples there is provided a user equipment comprising:
means for receiving from a serving cell a configuration for conditional handover from the serving cell to one or more target cells, wherein the configuration for conditional handover configures one or more conditions for executing conditional handover;
means for determining satisfaction of the one or more conditions for executing conditional handover;
means for, in dependence upon determining satisfaction of a condition for executing conditional handover, executing a handover from the serving cell to a target cell; wherein the condition for executing conditional handover includes a time-based condition.

In some but not necessarily all examples, conditional handover to a target cell is executed for a target cell in dependence upon a current time and an estimated arrival timing, for the UE arriving for handover at the target cell, received from the serving cell.

In some but not necessarily all examples, a list of candidate target cells for conditional handover is dependent upon a current time and, for each candidate target cell, an estimated arrival timing, for the UE arriving for handover at the candidate target cell, received from the serving cell.

In some but not necessarily all examples, the user equipment comprises means for providing to a UE, the estimated arrival timing for the UE arriving for handover at a target cell.

In some but not necessarily all examples, the estimated arrival timing for the UE arriving for handover at the target cell is comprised within an information element comprised with a Handover Command (RRC Connection Reconfiguration message) sent to UE,

In some but not necessarily all examples, the information element comprises an Estimated Time Interval of Arrival information element and a related confidence Level information element

In some but not necessarily all examples, the information element comprises a Type of Probability Distribution IE.

According to various, but not necessarily all, examples there is provided a computer program that when run on a processor of a user equipment causes:
determining satisfaction of the one or more conditions for executing conditional handover, wherein the condition for executing conditional handover includes a time-based condition; and
in dependence upon determining satisfaction of a condition for executing conditional handover, executing a handover from the serving cell to a target cell.

According to various, but not necessarily all, examples there is provided a method comprising:
receiving from a serving cell a configuration for conditional handover from the serving cell to one or more target cells, wherein the configuration for conditional handover configures one or more conditions for executing conditional handover;
determining satisfaction of the one or more conditions for executing conditional handover;

in dependence upon determining satisfaction of a condition for executing conditional handover, executing a handover from the serving cell to a target cell;
wherein the condition for executing conditional handover includes a time-based condition.

According to various, but not necessarily all, examples there is provided examples as claimed in the appended claims.

The term network node defines an apparatus that is, for example, in any of the following states: boxed, warehoused, imported, exported, in transit or in use. The term network node does not imply that the apparatus is in use.

The term user equipment defines an apparatus that is, for example, in any of the following states: boxed, warehoused, imported, exported, in transit or in use. The term user equipment does not imply that the apparatus is in use.

While the above examples of the disclosure and optional features are described separately, it is to be understood that their provision in all possible combinations and permutations is contained within the disclosure. It is to be understood that various examples of the disclosure can comprise any or all of the features described in respect of other examples of the disclosure, and vice versa. Also, it is to be appreciated that any one or more or all of the features, in any combination, may be implemented by/comprised in/performable by an apparatus, a method, and/or computer program instructions as desired, and as appropriate.

### BRIEF DESCRIPTION

Some examples will now be described with reference to the accompanying drawings in which:
FIG. 1 shows an example of the subject matter described herein;
FIG. 2 shows another example of the subject matter described herein;
FIG. 3 shows another example of the subject matter described herein;
FIGs. 4A, 4B show another example of the subject matter described herein;
FIG. 5 shows another example of the subject matter described herein;
FIG. 6 shows another example of the subject matter described herein;
FIG. 7 shows another example of the subject matter described herein;
FIG. 8A shows another example of the subject matter described herein;
FIG. 8B shows another example of the subject matter described herein;
FIG. 8C shows another example of the subject matter described herein;
FIG. 9 shows another example of the subject matter described herein;
FIG. 10 shows another example of the subject matter described herein.

The figures are not necessarily to scale. Certain features and views of the figures can be shown schematically or exaggerated in scale in the interest of clarity and conciseness. For example, the dimensions of some elements in the figures can be exaggerated relative to other elements to aid explication. Similar reference numerals are used in the figures to designate similar features. For clarity, all reference numerals are not necessarily displayed in all figures.

### DETAILED DESCRIPTION

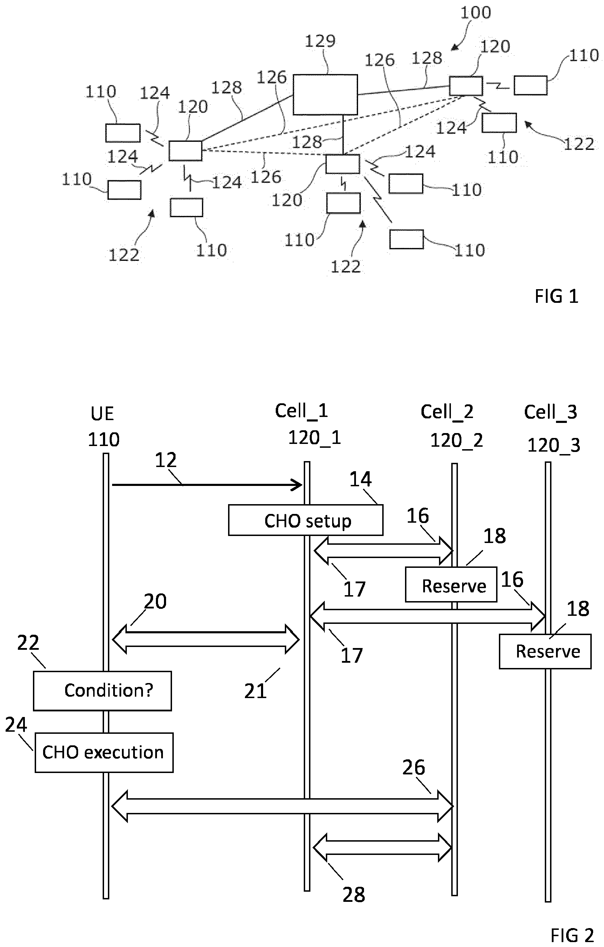

FIG 1 illustrates an example of a network 100 comprising a plurality of network nodes including terminal nodes 110, access nodes 120 and one or more core nodes 129. The terminal nodes 110 and access nodes 120 communicate with each other. The one or more core nodes 129 communicate with the access nodes 120.

The network 100 is in this example a radio telecommunications network, in which at least some of the terminal nodes 110 and access nodes 120 communicate with each other using transmission/reception of radio waves.

The one or more core nodes 129 may, in some examples, communicate with each other. The one or more access nodes 120 may, in some examples, communicate with each other.

The network 100 may be a cellular network comprising a plurality of cells 122 each served by an access node 120. In this example, the interface between the terminal nodes 110 and an access node 120 defining a cell 122 is a wireless interface 124.

The access node 120 is a cellular radio transceiver. The terminal nodes 110 are cellular radio transceivers.

In the example illustrated the cellular network 100 is a third generation Partnership Project (3GPP) network in which the terminal nodes 110 are user equipment (UE) and the access nodes 120 are base stations.

In the particular example illustrated the network 100 is an Evolved Universal Terrestrial Radio Access network (E-UTRAN). The E-UTRAN consists of E-UTRAN NodeBs (eNBs) 120, providing the E-UTRA user plane and control plane (RRC) protocol terminations towards the UE 110. The eNBs 120 are interconnected with each other by means of an X2 interface 126. The eNBs are also connected by means of the S1 interface 128 to the Mobility Management Entity (MME) 129.

In other example the network 100 is a Next Generation (or New Radio, NR) Radio Access network (NG-RAN). The NG-RAN consists of gNodeBs (gNBs) 120, providing the user plane and control plane (RRC) protocol terminations towards the UE 110. The gNBs 120 are interconnected with each other by means of an X2/Xn interface 126. The gNBs are also connected by means of the N2 interface 128 to the Access and Mobility management Function (AMF).

A user equipment (UE) comprises a mobile equipment. Where reference is made to user equipment that reference includes and encompasses, wherever possible, a reference to mobile equipment and terminal node.

In a cellular telecommunications network, a user equipment has a radio connection to a serving cell (e.g. a connected state via a transmission reception point of the serving cell). The serving cell can change. The change in serving cell is called handover.

Conditional Handover (CHO) is a handover that is executed by the UE 110 when one or more handover execution conditions are met.

In conditional handover, instead of preparing one target cell, one or more multiple candidate target cells are prepared in advance. The handover command is sent to the UE 110 early in advance of when handover may be required. The handover command configures target cells and the conditions at the UE 110, which when satisfied, trigger handover of the UE 110 to the respective configured target cell. The target cells do not expect the UE to access the cell immediately, or even access it at all.

When a condition configured in the UE 110 is satisfied for one of the configured target cells, then UE 110 executes the handover and connects to that target cell.

In the following, the phrase 'a cell 120' may be used instead of 'access node 120 of a cell' or 'cell 120_i' may be used instead of 'access node 120_i of cell'. Therefore the phrases are interchangeable.

In the example illustrated in FIG 2, the user equipment 110 sends one or more measurement reports 12 to the access node of the serving cell 120_1.

These measurement reports can, for example, inform the network about radio conditions at the UE 110. For example, if the quality of the radio link to the serving cell 120_1 is degrading and/or if the radio link quality for another neighboring cell 120_2, 120_3 is improving or getting better than the serving cell radio link quality.

The access node (base station) of the serving cell 120_1 makes a decision 14 to setup conditional handover for the UE 110. The decision can, for example, be dependent upon the one or more measurement reports 12.The base station of the serving cell 120_1 sends a conditional handover request 16 to the access node (base station) of each candidate target cell 120_2, 120_3.

The access node (base station) of the candidate target cell 120_2 performs admission control 18, and sends a handover request acknowledgement 17 back to the base station of the serving cell 120_1. The request acknowledgement includes a UE configuration to be used to handover to the target cell 120_2.

The access node (base station) of the candidate target cell 120_3 performs admission control 18, and sends a handover request acknowledgement 17 back to the base station of the serving cell 120_1. The request acknowledgement includes a UE configuration to be used to handover to the target cell 120_3.

The access node (base station) of the serving cell 120_1 sends a UE configuration message 20 to the UE 110 to configure conditional handover of the UE 110 to one or more of the target cells 120_2, 120_3.

The configuration message 20 can, for example, be a RRCReconfiguration message. The UE can send a reply message 21, for example a RRCReconfigurationComplete message.

The UE 110 evaluates 22 the conditional handover conditions. When the conditional handover conditions are satisfied conditional handover is executed 24. The UE detaches for the previous serving cell 120_1 and attaches 26 to the target cell 120_2 for which the handover condition has been satisfied. The target cell 120_2 becomes the new serving cell.

The new serving cell 120_2 informs the old serving cell 120_1 that the UE 110 has handed over via a handover complete message 28 (e.g. via UE context release message).

The request 16 for conditional handover provides at least an estimated arrival timing for a UE 110 arriving for handover at a target cell 120_2.

An estimated arrival timing for a UE 110 arriving for handover at a target cell 120_2 is information that provides (or enables determination of) a timing of when a UE becomes likely to handover at a target cell 120_2.

In some examples, the likelihood of handover is defined via a confidence level associated with the estimated arrival timing for a UE 110 arriving for handover at a target cell 120_2, 120_3.

In at least some examples, the request 16 for conditional handover provides at least an estimated arrival timing for a UE 110 arriving for handover at each target cell 120_2, 120_3 in a set of target cells. The set of target cells can, for example, be a sub-set of the set of all current target cells for that UE 110. The set of target cells can, for example, be the set of all current target cells for that UE 110.

The introduction of a time-dimension to conditional handover provides improved flexibility. The conditions for handover can include time-based conditions. This allows for improved optimization of resource management.

In at least some examples, the network node 120_1 of the serving cell 120_1 is configured to:
provide to the one or more target cells 120_2, 120_3, a request 16 for conditional handover from the serving cell 120_1 to the one or more target cells 120_2, 120_3 ,
wherein the request 16 for conditional handover triggers configuration of at least one or more network resources for conditional handover; and
provides to one or more UE 110, a UE configuration 20 for conditional handover from the serving cell 120_1 to one or more target cells 120_2, 120_3, wherein the UE configuration 20 for conditional handover configures one or more conditions for executing conditional handover;
wherein the request 16 for conditional handover provides at least an estimated arrival timing for a UE 110 arriving for handover at a target cell 120_2.

In at least some examples, the network node 120_2 of the target cell 120_2 is configured to:
receive from the serving cell 120_1 the request 16 for conditional handover from the serving cell 120_1 to the target cell 120_2, wherein the request 16 for conditional handover triggers configuration of at least one or more network resources for conditional handover, wherein the request 16 for conditional handover provides at least an estimated arrival timing for the UE 110 arriving for handover at the target cell 120_2; and
reserve the one or more network resources for conditional handover for a time period dependent upon the estimated arrival

In at least some examples, the user equipment 110 is configured to:
receive from the serving cell 120_1 a configuration 20 for conditional handover from the serving cell 120_1 to one or more target cells 120_2, 120_3, wherein the configuration 20 for conditional handover configures one or more conditions for executing conditional handover;
determine satisfaction 22 of the one or more conditions for executing conditional handover;
in dependence upon determining satisfaction 22 of a condition for executing conditional handover 24 for a target cell 120_2, execute a handover from the serving cell 120_1 to the target cell 120_2;
wherein the condition for executing conditional handover includes a time-based condition.

In at least some examples, the estimated arrival timing for a UE 110 arriving for handover at a target cell 120_2, 120_3 defines an estimated time interval of arrival 52 at the target cell 120_2, 120_3. The time interval of arrival 52 at the target cell 120_2, 120_3 is a time window during which the UE 110 is expected to arrive for handover at a target cell 120_2. The expectation (confidence level) can be defined implicitly or explicitly. An implicit definition of a confidence level can, for example, occur through a specification or via a previous configuration or via definition of a probability distribution. An explicit definition of a confidence level can, for example, occur via information provided contemporaneously with the estimated arrival timing for a UE 110 arriving for handover at a target cell 120_2.

In some examples, the estimated arrival timing for a UE 110 arriving for handover at a target cell 120_2, 120_3 explicitly defines a time interval of arrival 53 with an implicitly defined confidence level. In some examples, the estimated arrival timing for a UE 110 arriving for handover at a target cell 120_2, 120_3 explicitly defines a time interval of arrival 53 and explicitly defines a confidence level. In some examples, the estimated arrival timing for a UE 110 arriving for handover at a target cell 120_2, 120_3 explicitly defines a confidence level or probability distribution and implicitly defines an estimated time interval of arrival 52 at the target cell 120_2, 120_3.

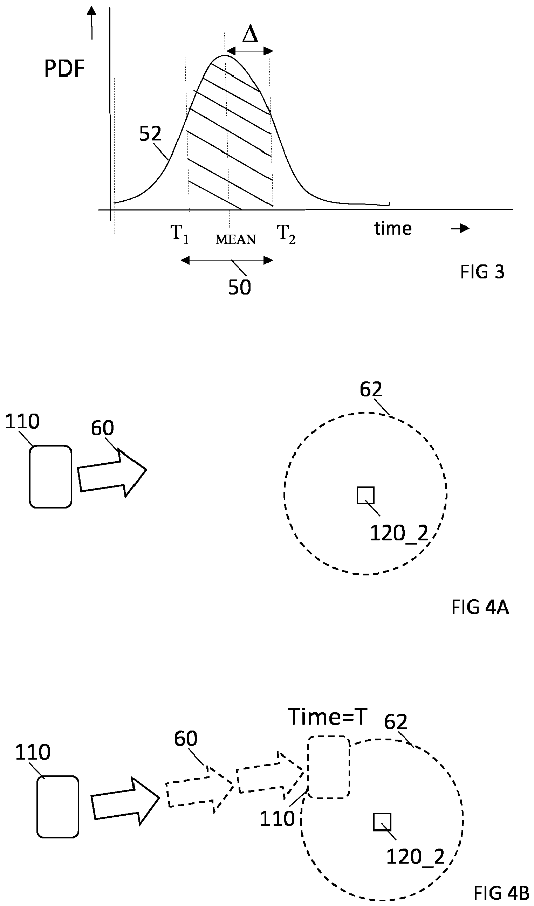

FIG 3 illustrates an estimated time interval of arrival 52 at the target cell 120_2, 120_3. FIG 3 illustrates a probability density function (PDF) 52 for the estimated arrival timing for a UE 110 arriving for handover at a target cell 120_2. The arrival timing is the random variable.

The probability (confidence level) that a UE arrives for handover at the target cell 120_2 between a time t1 and a time t2 is determined by integrating the PDF between the limits t1 and t2. The limits t1 and t2 can be defined as a time range, for example t1= T1 and t2=T2 or as a deviation Δ from a mean µ e.g. t1= µ -Δ and t2= µ +Δ.

In at least some examples, the estimated arrival timing for a UE 110 arriving for handover at a target cell 120_2, 120_3 defines a probability distribution 52. In some examples, the definition is implicit, the probability distribution 52 having been previously defined in a specification or via a previous configuration. In other examples, the probability distribution is defined explicitly, for example, contemporaneously with the estimated arrival timing for a UE 110 arriving for handover at a target cell 120_2.

In at least some examples, the estimated arrival timing for a UE 110 arriving for handover at a target cell 120_2 is comprised within an information element (IE) comprised with a Conditional Handover Information Request information element. The Conditional Handover Information Request information element is comprised within a Handover Request Message 16.

In some but not necessarily all examples, the. Conditional Handover Information Request information element comprises an Estimated Time Interval of Arrival information element and a related Confidence Level information element. The related Confidence Level IE can be optional.

In some but not necessarily all examples, the. Conditional Handover Information Request information element comprises a Type of Probability Distribution information element.

For example, in one implementation,
the Estimated Time Interval of Arrival IE comprises T1, T2 defining a time range;
the Type of Probability Distribution indicates the characteristics of the PDF;
the Confidence Level IE comprises a value dependent upon the integration of the PDF between T1 and T2.

For example, in another implementation,
the Estimated Time Interval of Arrival IE comprises a mean time µ and deviation Δ;
the Type of Probability Distribution indicates the characteristics of the PDF;
the Confidence Level IE comprises a value dependent upon the integration of the PDF between µ-Δ and µ + Δ.

In some but not necessarily all example, the estimated arrival timing for a UE arriving for handover at a target cell is an estimated time T of arrival in an estimated area of arrival 62 if the UE 110 continues with an estimated trajectory 60. This is illustrated in FIGs 4A and 4B.

The trajectory 60 can be defined by a position and a velocity (vector change in position).

FIG 4A illustrates a trajectory 60 of a UE 110 at the time of conditional handover setup.

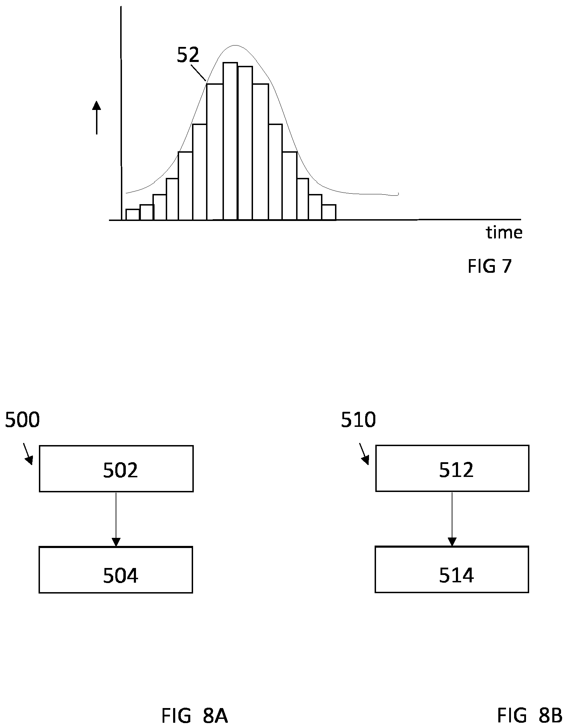

FIG 7B illustrates an estimated trajectory 60 of the UE 110 at the point in time T when the UE is estimated to arrive for handover at a target cell.

The UE arrives for handover at a target cell when it enters the estimated area of arrival 62 for that target cell.

Thus in some but not necessarily all examples, the estimated arrival timing for a UE 110 arriving for handover at a target cell is an estimated time T of arrival in an estimated area of arrival 62 if the UE 110 continues with an estimated trajectory 60. This is illustrated in FIGs 7A and 7B.

In at least some examples, the estimated trajectory 60 is based on historic positions of the UE 110. The historic positions of the UE can for example be based on self-reported positions by the UE 110 and/or network estimated positions of the UE. The network estimated positions can, for example, be based on trilateration (using time of flight) or triangulation using beam direction, or a combination of both. For example, a bearing can be estimated from a CSI-RS beam or TCI and a distance can be estimated from a timing advance.

The estimated area of arrival 62 is based on historic positions of UEs of where handover occurred to the target cell. This can be based on an estimated position of the UE (see previous paragraph) and an estimated time of handover. For a serving cell 120_1 this can be, for example, the time at which the handover complete message 28 is received. In some examples, information of the historic positions of UEs where handover occurred to the target cell is collated by the target cell and communicated to the serving cell via a network message.

Additionally or alternatively, information of the historic positions of UEs where handover occurred to the target cell is collated by the serving cell based on estimated of UE positions and estimates of when handover occurred.

It will appreciated that additional parameters can be used to improve the estimated arrival timing for a UE arriving for handover at a target cell. For example, the estimate can, in some examples, take into account radio conditions and/or network resources.

A machine learning algorithm can be trained to capture the complex interaction of multiple input parameters that can influence estimated arrival timing for a UE arriving for handover at a target cell, and then used to produce an estimated arrival timing for a UE arriving for handover at a target cell based on current input parameters.

Referring back to FIG 2, reference will be made to the target network node 120_2. However, a similar description is apposite for the target network node 120_3.

The target network node 120_2 is configured to reserve one or more network resources for conditional handover for a time period dependent upon the estimated arrival timing for the UE 110 arriving for handover at the target cell 120_2.

In some examples, the target network node 120_2 is configured to modifying one or more network resources for conditional handover in dependence upon a current time period relative to the estimated arrival timing for the UE arriving for handover at the target cell 120_2.

For example, the target network node 120_2 can be configured to delay reservation of network resources and only reserve network resources for conditional handover for a UE 110 from a time period dependent upon the estimated arrival timing for the UE 110 arriving for handover at the target cell 120_2. The network resources are reserved dynamically only from when they are likely to be needed.

For example, the target network node 120_2 can be configured to release reserved network resources for conditional handover for a UE 110 after a time period dependent upon the estimated arrival timing for the UE 110 arriving for handover at the target cell 120_2. The network resources are reserved dynamically being released when they are likely to not be needed.

In at least some example, the network resources are therefore reserved dynamically for a period of time when they are likely to be needed. The criteria for 'likely' can be adjusted and based on a confidence level or expectation value.

In at least some example, the network resources are therefore unreserved (released) dynamically for a period of time when they are unlikely to be needed. The criteria for 'unlikely' can be adjusted and based on a confidence level or expectation value.

The confidence level or expectation value threshold that triggers reservation of network resources can be the same of different to the confidence level or expectation value threshold that triggers release of reserved network resources.

The expectation is that conditional handover of a UE 110 to the target cell will be executed for the target cell in dependence upon a current time and an estimated arrival timing for the UE arriving for handover at the target cell.

The estimated arrival timing for the UE arriving for handover at the target cell can be adjusted based on resource conditions at the serving cell.

It will therefore be appreciated the examples decrease the resource reservation time. In at least some examples, there is a decrease in the resource reservation time while CHO completion success ratio remains reliable.

A benefit is that the resources on a given target cell will not need to be reserved for prolonged periods (as currently) but for reduced time intervals optimized for the respective UEs.

Referring back to FIG 2, reference will be made to the user equipment 110. The condition for executing conditional handover, received at the UE 110 from the serving cell 120_1 in configuration message 20, includes a time-based condition.

In at least some examples, the serving cell 120_1 is configured to provide to the UE, the estimated arrival timing for the UE arriving for handover at a target cell. The UE 110 is configured to receive the estimated arrival timing for the UE arriving for handover at a target cell provided by the serving cell 120_1.

In at least some examples, the estimated arrival timing for the UE arriving for handover at the target cell is comprised within the Handover Command 20 sent to the UE 110. The estimated arrival timing for a UE 110 arriving for handover at a target cell 120_2, 120_3 can be as previously described above.

In at least some examples, the estimated arrival timing for a UE 110 arriving for handover at a target cell 120_2 is comprised within an (arrival) information element (IE) comprised with an information element comprised within a Handover Command Message 20. The arrival information element can comprise the Estimated Time Interval of Arrival information element and the related Confidence Level information element (IE). The related Confidence Level IE can be optional. In some but not necessarily all examples, the arrival information element comprises a Type of Probability Distribution information element.

The UE 110 uses the time-based condition for executing conditional handover.

In some examples, the UE 110 uses the estimated arrival timing, for the UE 110 arriving for handover at the target cell 120_2 to infer behavior at the target cell 120_2. In some examples, the UE uses the estimated arrival timing, for the UE 110 arriving for handover at the target cell 120_2 to determine, perhaps with a confidence or expectation level, whether (or not) the target cell 120_2 is reserving the handover resources.

In at least some examples, the UE is configured to execute conditional handover to a target cell 120_2 in dependence upon a current time and an estimated arrival timing, for the UE 110 arriving for handover at the target cell 120_2, received from the serving cell 120_1.

In at least some examples, the UE is configured to maintain a list of candidate target cells for conditional handover. This list is dependent upon a current time and, for each candidate target cell, an estimated arrival timing, for the UE 110 arriving for handover at the respective candidate target cell, received from the serving cell 120_1. The list can, for example, comprise targets cells that are expected to be currently reserving resources for conditional handover of the UE 110.

The following paragraphs describe some examples in more detail.

Once a gNB 120_ of a source cell has decided to set-up conditional Handover (CHO), the gNB 120_1 of the source cell prepares one or more candidate target gNBs 120_2, 120_3 for the conditional handover and configures a UE 110 with one or more CHO Conditions. Those conditions are evaluated at the UE 110 from the moment the CHO configuration is received. Evaluation stops when the handover is executed to another cell. CHO configuration is typically very early to achieve robustness

The current Handover Request message comprises a Conditional Handover Information Request IE and that contains an Estimated Arrival Probability IE. The Estimated Arrival Probability IE provides a numeric estimate of the probability that the UE 110 will arrive at a cell for handover.

The Estimated Arrival Probability IE indicates a likelihood that the UE will end up accessing the target cell for which a handover request is sent. The estimated arrival probability IE provides the target cell with information on how likely it is that the handover will take place at a certain target. If the Estimated Arrival Probability is small a target gNB could enable overbooking of radio resources that are reserved for the UE as the probability that the UE will arrive at the target cell is low.

FIG 2, is an example of a probability density function representing UE arrival as a function of time. It is the probability density function of UE arrival time to target cell.

In FIG 2 the time interval ranging from T1 to T2 represents a time interval where UE arrival is expected with the confidence level being equal to the region in the shaded area under this probability density function. In other words, confidence level is actually a probability. In the example, a normal probability density function is shown though other densities may also be observed in practice depending on the UE mobility patterns.

In one implementation, the Estimated Time Interval of Arrival IE is reported as {T₁, T₂} where the T₁ and T₂ are reported as a time interval from a reference point in time, for example the point in time the CHO preparation procedure has been attempted (timing of the Handover Request 16 from source to target node). The confidence level IE is reported as a probability in percentage [1... 100] with each value in the range illustrating a percentage of confidence). The Type of Probability Distribution IE identifies the distribution type (normal, uniform, chi square, binomial, poisson). The pure Estimated Time Interval of Arrival is reported.

In another implementation, the Estimated Time Interval of Arrival IE is reported as {T_{MEAN}, Δ} where T_{MEAN} is reported as a time interval from a reference point in time, for example the point in time the CHO preparation procedure has been attempted (timing of the Handover Request 16 from source to target node). In this case, the Estimated Time Interval of Arrival is then given as {T_{MEAN} - Δ, T_{MEAN} + Δ}. The confidence level IE is reported as a probability in percentage [1... 100] with each value in the range illustrating a percentage of confidence). The Type of Probability Distribution IE identifies the distribution type (normal, uniform, chi square, binomial, poisson). Estimated Time Interval of Arrival is reported using statistical parameters via reporting the T_{MEAN} and Δ as a deviation value.

The probability distribution can be calculated empirically by observing times of arrivals of different UEs during CHO Handover preparation procedure.

Reporting the "Estimated Time Interval of Arrival IE", "Confidence Level IE" and "Type of Probability Distribution IE" in parallel to "Estimated Arrival Probability IE" within the Conditional Handover Information Request IE of the Handover Request is expected to significantly improve the resource utilization for CHO.

Fig. 4 illustrates an example of how a target cell 120_2 can use the Estimated Time Interval of Arrival IE and the corresponding confidence level.

In this example, the handover Request 16 comprises a Conditional Handover Information Request IE which comprises the Estimated Arrival Probability IE, and the Estimated Time Interval of Arrival IE, the Confidence Level IE, and the Type of Probability Distribution.

Proving the probability distribution enables allows the target cell 120_2, 120_2 to adjust the estimated time interval of arrival, for example, because load conditions in the target cell have changed. A new estimated time interval of arrival can be determined from a combination of confidence level and probability distribution because the confidence level is based on the integral of the probability distribution over the estimated time interval of arrival.

The target node compares 34 the received confidence level (CL) to a threshold (TCL) to determine behaviour.

If the confidence level (CL) is above a threshold (CLT), namely if CL>CLT the target node may use, via admission control 18, the resources outside the indicated time interval for handovers related to other UEs. The target cell 120_2 replies with the Handover Request acknowledgement 17.

If the confidence level is below the threshold (CL<CLT) the target node 36 may retain the configured resources but overbook the resources in the provided Estimated time interval. The target cell 120_2 replies with the Handover Request acknowledgement 17.

The confidence level can alternatively be determined by integrating the probability distribution over the Time Interval of Arrival.

Setting the confidence threshold may depend on the type of probability distribution.

The source (serving) node 120_1 may rely on CHO condition, UE trajectory prediction and resource conditions at the given target node to obtain the Estimated Time Interval of Arrival IE, the Confidence Level IE, and the Type of Probability Distribution.

The target node 120_2 shall consider the information included within the lEs as a recommendation.

If the target node can interpret the information, based on UE historical data in this node, such that if the UE does not arrive within the interval and extension of the interval is not possible due to load conditions it shall cancel the resource reservation. Alternatively, an (optional) indicator in the request can be added to prioritize the source or target node view. In case of target node view is prioritized upon a UE arrival outside the interval or if the confidence is below the target may cancel the resources. In case of source node view is prioritized the target shall maintain the resources.

Similarly such rules could be included towards the UE. If UE observes that it hasn't arrived at a certain target during the indicated time interval it can release the Handover Configuration towards that target. Or if during interval [T1,T2] it measures that the indicated target has a strong signal strength it should use this indication as a trigger to start normal handover.

In case the resource conditions have changed in the target node 120_2 compared to point in time the Handover Request 16 with the lEs was received, the Estimated Time Interval of Arrival may be further changed.

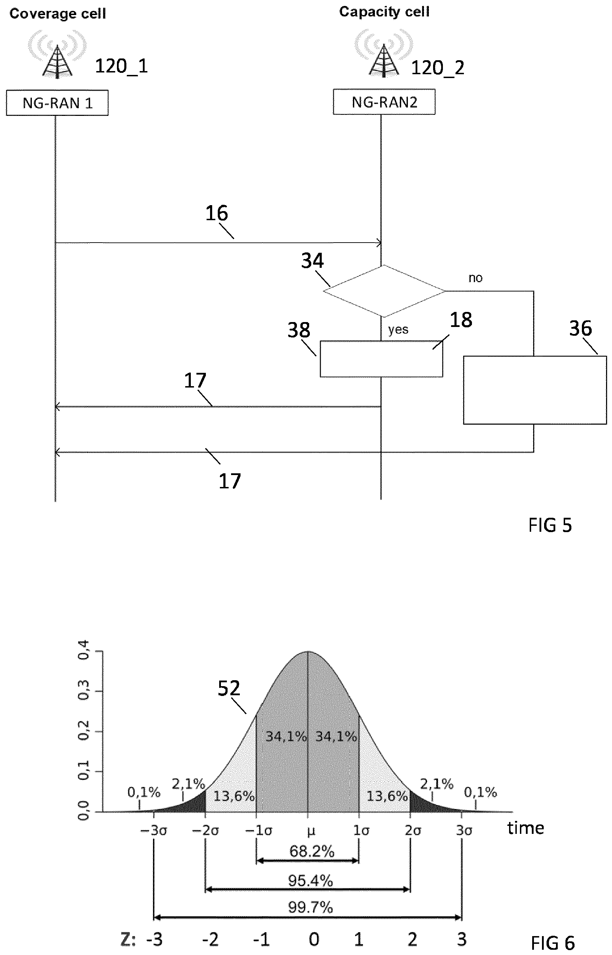

In case of normal density function, as illustrated in FIG 6, a "Confidence Level IE" equal to around 70 % means that Δ in the reported "Estimated Time Interval of Arrival IE" represents a standard deviation value. The target side may further change the Δ to Δ₁ and based on the relative ratio of the change (Δ₁/Δ) obtain corresponding "Confidence level". This can be obtained based on look up tables as function of Confidence Level and Δ₁/Δ (Z) that are generally known for normal density functions.

In case intended Estimated Time Interval of Arrival change has a very low Confidence Level the target node may cancel the HO.

As illustrated in FIG 7, the new lEs can be obtained based on measurement discrete density function of the arrival of the UE to the target cell/node. In the first step a number of bins, let's call it as K, of the discrete density function is defined. The i-th bin ranges from time tᵢ₋₁ to tᵢ. The smaller the difference ti - t₁₋₁ is, the more bins K are needed to cover possible time interval of UE's arrival and the discrete density function is more accurate. The bins can have different width.

In the second step the bins are populated from the UE historical data related to CHO time of arrival t of UE. Depending on bin the given t belongs to, the cumulative count for the bin is increased by 1. It shall be noted that the discrete density function does not need to be obtained per each individual UE but it can be group of UEs with the same UE trajectory e.g., UEs that follow a common trajectory with respect to a sequence of cells/beams/detailed location information/etc.

The following amendments to current 3GPP specifications are possible:
If the Estimated Time Interval of Arrival IE is contained in the Conditional Handover Information Request IE included in the HANDOVER REQUEST message, then the target NG-RAN node may use the information to control allocation of necessary resources for the incoming CHO.

If the Estimated Time Interval of Arrival IE is contained in the CHO Information SN Addition IE included in the S-NODE ADDITION REQUEST message, then the S-NG-RAN node may use the information to control allocation of necessary resources for the UE.

If the Estimated Time Interval of Arrival IE is contained in the CHO Information SN Modification IE included in the S-NODE MODIFICATION REQUEST message, then the S-NG-RAN node may use the information to control allocation of necessary resources for the UE.

If the Estimated Time Interval of Arrival IE is contained in the Conditional PSCell Addition Information Request IE included in the S-NODE ADDITION REQUEST message, then the candidate target S-NG-RAN node may use the information to control allocation of necessary resources for the incoming CPAC procedure.

If the Estimated Time Interval of Arrival IE is contained in the Conditional PSCell Addition Information Modification Request IE included in the S-NODE MODIFICATION REQUEST message, then the candidate target S-NG-RAN node may use the information to control allocation of necessary resources for the incoming CPAC procedure.

If the Estimated Time Interval of Arrival IE is contained in the Conditional PSCell Change Information Required IE included in the S-NODE CHANGE REQUIRED message, the M-NG-RAN node shall, if supported, forward this information to the candidate target S-NG-RAN node, then the candidate target S-NG-RAN node may use the information to control allocation of necessary resources for the incoming CPAC procedure.

FIG 8A illustrates an example of a method 500 comprising:
at block 502, providing to one or more UE, a UE configuration for conditional handover from a serving cell to one or more target cells, wherein the UE configuration for conditional handover configures one or more conditions for executing conditional handover;
at block 504, providing to the one or more target cells, a network configuration for conditional handover from a serving cell to the one or more target cells, wherein the
network configuration for conditional handover configures at least one or more network resources for conditional handover;
wherein the network configuration for conditional handover provides at least an estimated arrival timing for a UE arriving for handover at a target cell.

The method 500 can, for example, be performed at a network node 120 such as a serving or source network node.

FIG 8B illustrates an example of a method 510 comprising:
at block 512, receiving from a serving cell a network configuration for conditional handover from the serving cell to a target cell, wherein the network configuration for conditional handover configures at least one or more network resources for conditional handover, wherein the network configuration for conditional handover provides at least an estimated arrival timing for the UE arriving for handover at a target cell;
at block 514, reserving the one or more network resources for conditional handover for a time period dependent upon the estimated arrival timing for the UE arriving for handover at the target cell.

The method 510 can, for example, be performed at a network node 120 such as a target network node.

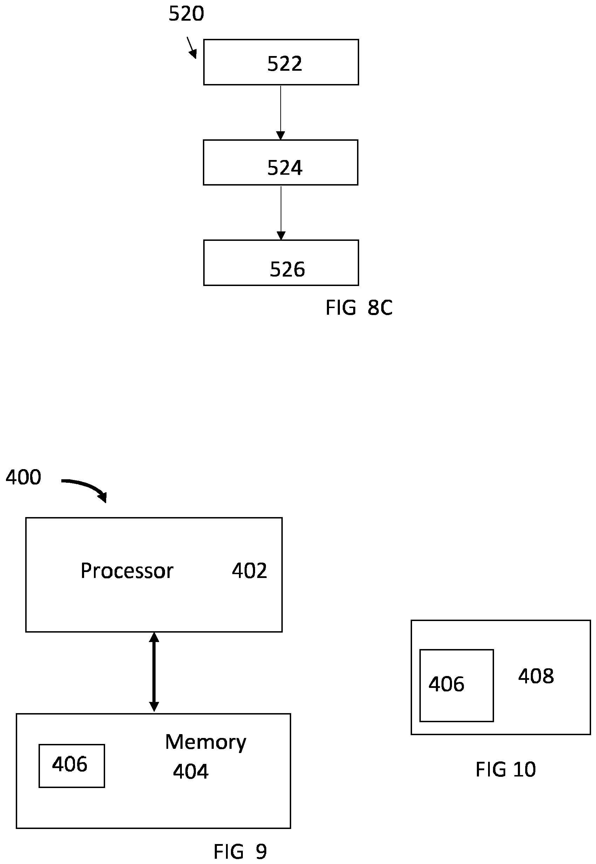

FIG 8C illustrates an example of a method 520 comprising:
at block 522, receiving from a serving cell a configuration for conditional handover from the serving cell to one or more target cells, wherein the configuration for conditional handover configures one or more conditions for executing conditional handover;
at block 522, determining satisfaction of the one or more conditions for executing conditional handover;
at block 524, in dependence upon determining satisfaction of a condition for executing conditional handover, executing a handover from the serving cell to a target cell;
wherein the condition for executing conditional handover includes a time-based condition.

The method 510 can, for example, be performed at a terminal node 110 such as user equipment.

Fig 9 illustrates an example of a controller 400 suitable for use in an apparatus such as network node 120 or a terminal node 110. Implementation of a controller 400 may be as controller circuitry. The controller 400 may be implemented in hardware alone, have certain aspects in software including firmware alone or can be a combination of hardware and software (including firmware).

As illustrated in Fig 9 the controller 400 may be implemented using instructions that enable hardware functionality, for example, by using executable instructions of a computer program 406 in a general-purpose or special-purpose processor 402 that may be stored on a computer readable storage medium (disk, memory etc) to be executed by such a processor 402.

The processor 402 is configured to read from and write to the memory 404. The processor 402 may also comprise an output interface via which data and/or commands are output by the processor 402 and an input interface via which data and/or commands are input to the processor 402.

The memory 404 stores a computer program 406 comprising computer program instructions (computer program code) that controls the operation of the apparatus when loaded into the processor 402. The computer program instructions, of the computer program 406, provide the logic and routines that enables the apparatus to perform the methods illustrated in the accompanying Figs. The processor 402 by reading the memory 404 is able to load and execute the computer program 406.

The apparatus comprises:
at least one processor 402; and
at least one memory 404 including computer program code
the at least one memory 404 and the computer program code configured to, with the at least one processor 402, cause the apparatus at least to perform the method as illustrated in FIG 8A, 8B or 8C.

In at least some examples, a network node 120 comprises:
at least one processor 402; and
   at least one memory 404 including computer program code,
   the at least one memory storing instructions that, when executed by the at least one processor 402, cause the network node at least to:
provide to one or more UE, a UE configuration for conditional handover from a serving cell to one or more target cells, wherein the UE configuration for conditional handover configures one or more conditions for executing conditional handover;
provide to the one or more target cells, a network configuration for conditional handover from a serving cell to the one or more target cells, wherein the network configuration for conditional handover configures at least one or more network resources for conditional handover;
wherein the network configuration for conditional handover provides at least an estimated arrival timing for a UE arriving for handover at a target cell.

In at least some examples, a network node 120 comprises:
at least one processor 402; and
   at least one memory 404 including computer program code,
   the at least one memory storing instructions that, when executed by the at least one processor 402, cause the apparatus at least to:
reserve one or more network resources for conditional handover for a time period dependent upon an estimated arrival timing for the UE arriving for handover at the target cell, wherein the estimated arrival timing for the UE arriving for handover at the target cell is received from a serving cell during network configuration for conditional handover.

In at least some examples, a terminal node 110 comprises:
at least one processor 402; and
   at least one memory 404 including computer program code,
   the at least one memory storing instructions that, when executed by the at least one processor 402, cause the apparatus at least to:
      determine satisfaction of the one or more conditions for executing conditional handover, wherein the condition for executing conditional handover includes a time-based condition; and
      in dependence upon determining satisfaction of a condition for executing conditional handover, execute a handover from the serving cell to a target cell.

As illustrated in Fig 10, the computer program 406 may arrive at the apparatus via any suitable delivery mechanism 408. The delivery mechanism 408 may be, for example, a machine readable medium, a computer-readable medium, a non-transitory computer-readable storage medium, a computer program product, a memory device, a record medium such as a Compact Disc Read-Only Memory (CD-ROM) or a Digital Versatile Disc (DVD) or a solid-state memory, an article of manufacture that comprises or tangibly embodies the computer program 406. The delivery mechanism may be a signal configured to reliably transfer the computer program 406. The apparatus may propagate or transmit the computer program 406 as a computer data signal.

The computer program instructions may be comprised in a computer program, a non-transitory computer readable medium, a computer program product, a machine readable medium. In some but not necessarily all examples, the computer program instructions may be distributed over more than one computer program.

Although the memory 404 is illustrated as a single component/circuitry it may be implemented as one or more separate components/circuitry some or all of which may be integrated/removable and/or may provide permanent/semi-permanent/ dynamic/cached storage.

Although the processor 402 is illustrated as a single component/circuitry it may be implemented as one or more separate components/circuitry some or all of which may be integrated/removable. The processor 402 may be a single core or multi-core processor.

References to 'computer-readable storage medium', 'computer program product', 'tangibly embodied computer program' etc. or a 'controller', 'computer', 'processor' etc. should be understood to encompass not only computers having different architectures such as single /multi- processor architectures and sequential (Von Neumann)/parallel architectures but also specialized circuits such as field-programmable gate arrays (FPGA), application specific circuits (ASIC), signal processing devices and other processing circuitry. References to computer program, instructions, code etc. should be understood to encompass software for a programmable processor or firmware such as, for example, the programmable content of a hardware device whether instructions for a processor, or configuration settings for a fixed-function device, gate array or programmable logic device etc.

As used in this application, the term 'circuitry' may refer to one or more or all of the following:
(a) hardware-only circuitry implementations (such as implementations in only analog and/or digital circuitry) and
(b) combinations of hardware circuits and software, such as (as applicable):
   (i) a combination of analog and/or digital hardware circuit(s) with software/firmware and
   (ii) any portions of hardware processor(s) with software (including digital signal processor(s)), software, and memory or memories that work together to cause an apparatus, such as a mobile phone or server, to perform various functions and
(c) hardware circuit(s) and or processor(s), such as a microprocessor(s) or a portion of a microprocessor(s), that requires software (for example, firmware) for operation, but the software may not be present when it is not needed for operation.

This definition of circuitry applies to all uses of this term in this application, including in any claims. As a further example, as used in this application, the term circuitry also covers an implementation of merely a hardware circuit or processor and its (or their) accompanying software and/or firmware. The term circuitry also covers, for example and if applicable to the particular claim element, a baseband integrated circuit for a mobile device or a similar integrated circuit in a server, a cellular network device, or other computing or network device.

The blocks illustrated in the accompanying Figs may represent steps in a method and/or sections of code in the computer program 406. The illustration of a particular order to the blocks does not necessarily imply that there is a required or preferred order for the blocks and the order and arrangement of the block may be varied. Furthermore, it may be possible for some blocks to be omitted.

Where a structural feature has been described, it may be replaced by means for performing one or more of the functions of the structural feature whether that function or those functions are explicitly or implicitly described.

The systems, apparatus, methods and computer programs may use machine learning which can include statistical learning. Machine learning is a field of computer science that gives computers the ability to learn without being explicitly programmed. The computer learns from experience E with respect to some class of tasks T and performance measure P if its performance at tasks in T, as measured by P, improves with experience E. The computer can often learn from prior training data to make predictions on future data. Machine learning includes wholly or partially supervised learning and wholly or partially unsupervised learning. It may enable discrete outputs (for example classification, clustering) and continuous outputs (for example regression). Machine learning may for example be implemented using different approaches such as cost function minimization, artificial neural networks, support vector machines and Bayesian networks for example. Cost function minimization may, for example, be used in linear and polynomial regression and K-means clustering. Artificial neural networks, for example with one or more hidden layers, model complex relationship between input vectors and output vectors. Support vector machines may be used for supervised learning. A Bayesian network is a directed acyclic graph that represents the conditional independence of a number of random variables.

As used here 'module' refers to a unit or apparatus that excludes certain parts/components that would be added by an end manufacturer or a user.

The apparatus or controller can be a module.

The above-described examples find application as enabling components of: automotive systems; telecommunication systems; electronic systems including consumer electronic products; distributed computing systems; media systems for generating or rendering media content including audio, visual and audio visual content and mixed, mediated, virtual and/or augmented reality; personal systems including personal health systems or personal fitness systems; navigation systems; user interfaces also known as human machine interfaces; networks including cellular, non-cellular, and optical networks; ad-hoc networks; the internet; the internet of things; virtualized networks; and related software and services.

The apparatus can be provided in an electronic device, for example, a mobile terminal, according to an example of the present disclosure. It should be understood, however, that a mobile terminal is merely illustrative of an electronic device that would benefit from examples of implementations of the present disclosure and, therefore, should not be taken to limit the scope of the present disclosure to the same. While in certain implementation examples, the apparatus can be provided in a mobile terminal, other types of electronic devices, such as, but not limited to: mobile communication devices, hand portable electronic devices, wearable computing devices, portable digital assistants (PDAs), pagers, mobile computers, desktop computers, televisions, gaming devices, laptop computers, cameras, video recorders, GPS devices and other types of electronic systems, can readily employ examples of the present disclosure. Furthermore, devices can readily employ examples of the present disclosure regardless of their intent to provide mobility.

The term 'comprise' is used in this document with an inclusive not an exclusive meaning. That is any reference to X comprising Y indicates that X may comprise only one Y or may comprise more than one Y. If it is intended to use 'comprise' with an exclusive meaning then it will be made clear in the context by referring to "comprising only one..." or by using "consisting".

In this description, the wording 'connect', 'couple' and 'communication' and their derivatives mean operationally connected/coupled/in communication. It should be appreciated that any number or combination of intervening components can exist (including no intervening components), i.e., so as to provide direct or indirect connection/coupling/communication. Any such intervening components can include hardware and/or software components.

As used herein, the term "determine/determining" (and grammatical variants thereof) can include, not least: calculating, computing, processing, deriving, measuring, investigating, identifying, looking up (for example, looking up in a table, a database or another data structure), ascertaining and the like. Also, "determining" can include receiving (for example, receiving information), accessing (for example, accessing data in a memory), obtaining and the like. Also, " determine/determining" can include resolving, selecting, choosing, establishing, and the like.

In this description, reference has been made to various examples. The description of features or functions in relation to an example indicates that those features or functions are present in that example. The use of the term 'example' or 'for example' or 'can' or 'may' in the text denotes, whether explicitly stated or not, that such features or functions are present in at least the described example, whether described as an example or not, and that they can be, but are not necessarily, present in some of or all other examples. Thus 'example', 'for example', 'can' or 'may' refers to a particular instance in a class of examples. A property of the instance can be a property of only that instance or a property of the class or a property of a sub-class of the class that includes some but not all of the instances in the class. It is therefore implicitly disclosed that a feature described with reference to one example but not with reference to another example, can where possible be used in that other example as part of a working combination but does not necessarily have to be used in that other example.

Although examples have been described in the preceding paragraphs with reference to various examples, it should be appreciated that modifications to the examples given can be made without departing from the scope of the claims.

Features described in the preceding description may be used in combinations other than the combinations explicitly described above.

Although functions have been described with reference to certain features, those functions may be performable by other features whether described or not.

Although features have been described with reference to certain examples, those features may also be present in other examples whether described or not.

The term 'a', 'an' or `the' is used in this document with an inclusive not an exclusive meaning. That is any reference to X comprising a/an/the Y indicates that X may comprise only one Y or may comprise more than one Y unless the context clearly indicates the contrary. If it is intended to use 'a', 'an' or `the' with an exclusive meaning then it will be made clear in the context. In some circumstances the use of 'at least one' or 'one or more' may be used to emphasis an inclusive meaning but the absence of these terms should not be taken to infer any exclusive meaning.

The presence of a feature (or combination of features) in a claim is a reference to that feature or (combination of features) itself and also to features that achieve substantially the same technical effect (equivalent features). The equivalent features include, for example, features that are variants and achieve substantially the same result in substantially the same way. The equivalent features include, for example, features that perform substantially the same function, in substantially the same way to achieve substantially the same result.

In this description, reference has been made to various examples using adjectives or adjectival phrases to describe characteristics of the examples. Such a description of a characteristic in relation to an example indicates that the characteristic is present in some examples exactly as described and is present in other examples substantially as described.

The above description describes some examples of the present disclosure however those of ordinary skill in the art will be aware of possible alternative structures and method features which offer equivalent functionality to the specific examples of such structures and features described herein above and which for the sake of brevity and clarity have been omitted from the above description. Nonetheless, the above description should be read as implicitly including reference to such alternative structures and method features which provide equivalent functionality unless such alternative structures or method features are explicitly excluded in the above description of the examples of the present disclosure.

Whilst endeavoring in the foregoing specification to draw attention to those features believed to be of importance it should be understood that the Applicant may seek protection via the claims in respect of any patentable feature or combination of features hereinbefore referred to and/or shown in the drawings whether or not emphasis has been placed thereon.

## Claims

1. A network node comprising:
means for providing to one or more user equipment, UE, a UE configuration for conditional handover from a serving cell to one or more target cells, wherein the UE configuration for conditional handover configures one or more conditions for executing conditional handover;
means for providing to the one or more target cells, a network configuration for conditional handover from a serving cell to the one or more target cells, wherein the network configuration for conditional handover configures at least one or more network resources for conditional handover;
wherein the network configuration for conditional handover provides at least an estimated arrival timing for a UE arriving for handover at a target cell.

2. A network node as claimed in claim 1, wherein the estimated arrival timing for a UE arriving for handover at a target cell has an associated confidence level and/or an associated probability distribution.

3. A network node as claimed in claim 1 or 2, wherein the estimated arrival timing for a UE arriving for handover at a target cell defines an estimated time interval of arrival at the target cell.

4. A network node as claimed in any preceding claim, wherein the estimated arrival timing for a UE arriving for handover at a target cell explicitly defines a time window with an implicitly defined confidence level or the estimated arrival timing for a UE arriving for handover at a target cell explicitly defines a time window and explicitly defines a confidence level, or the estimated arrival timing for a UE arriving for handover at a target cell explicitly defines a confidence level and implicitly defines a time window.

5. A network node as claimed in any preceding claim, wherein the estimated arrival timing for a UE arriving for handover at a target cell is comprised within an information element comprised with a Conditional Handover Information Request information element comprised within a Handover Request Message.

6. A network node as claimed in claim 5, wherein the Conditional Handover Information Request information element comprises an Estimated Time Interval of Arrival information element and a related Confidence Level information element.

7. A network node comprising:
means for receiving from a serving cell a network configuration for conditional handover from the serving cell to a target cell, wherein the network configuration for conditional handover configures at least one or more network resources for conditional handover, wherein the network configuration for conditional handover provides at least an estimated arrival timing for a user equipment, UE, arriving for handover at a target cell;
means for reserving the one or more network resources for conditional handover for a time period dependent upon the estimated arrival timing for the UE arriving for handover at the target cell.

8. A user equipment, UE, comprising:
means for receiving from a serving cell a configuration for conditional handover from the serving cell to one or more target cells, wherein the configuration for conditional handover configures one or more conditions for executing conditional handover;
means for determining satisfaction of the one or more conditions for executing conditional handover;
means for, in dependence upon determining satisfaction of a condition for executing conditional handover, executing a handover from the serving cell to a target cell;
wherein the condition for executing conditional handover includes a time-based condition.

9. A user equipment as claimed in claim 8, wherein conditional handover to a target cell is executed for a target cell in dependence upon a current time and an estimated arrival timing, for the UE arriving for handover at the target cell, received from the serving cell.

10. A user equipment as claimed in any of claims 8 or 9, wherein a list of candidate target cells for conditional handover is dependent upon a current time and, for each candidate target cell, an estimated arrival timing, for the UE arriving for handover at the candidate target cell, received from the serving cell.

11. A user equipment as claimed in any of claims 8 to 10, wherein the estimated arrival timing for the UE arriving for handover at the target cell is comprised within an information element comprised with a Handover Command (RRC Connection Reconfiguration message) sent to UE,

12. A user equipment as claimed in claim 11, wherein the information element comprises an Estimated Time Interval of Arrival information element and a related confidence Level information element

13. A user equipment as claimed in claim 11 or 12, wherein the information element comprises a Type of Probability Distribution IE.

14. A computer program that when run on a processor of a user equipment causes:
determining satisfaction of the one or more conditions for executing conditional handover, wherein the condition for executing conditional handover includes a time-based condition; and
in dependence upon determining satisfaction of a condition for executing conditional handover, executing a handover from the serving cell to a target cell.

15. A method comprising:
receiving from a serving cell a configuration for conditional handover from the serving cell to one or more target cells, wherein the configuration for conditional handover configures one or more conditions for executing conditional handover;
determining satisfaction of the one or more conditions for executing conditional handover;
in dependence upon determining satisfaction of a condition for executing conditional handover, executing a handover from the serving cell to a target cell;
wherein the condition for executing conditional handover includes a time-based condition.
